# EUROPEAN PATENT APPLICATION

(11) **EP 4 557 494 A1**
(43) Date of publication of application: **21.05.2025**
(21) Application number: 23923414.9
(22) Date of filing: 24.02.2023
(51) Int. Cl.: H01M 50/528, H01M 50/536

(54) **BATTERY CELL, BATTERY AND ELECTRICAL APPARATUS**

(71) Applicant: Contemporary Amperex Technology (Hong Kong) Limited, Hong Kong (HK)
(72) Inventor: CHAI, Zhisheng, Ningde, Fujian 352100 (CN); ZHU, Linlin, Ningde, Fujian 352100 (CN)
(74) Representative: Ran, Handong
(86) International application number: PCT/CN2023/078187
(87) International publication number: WO 2024/174238

(57) **Abstract**

Provided in the present application are a battery cell, a battery and an electrical apparatus. The battery cell comprises an electrode assembly, a casing assembly and a current collecting component, the electrode assembly comprising a first tab, the casing assembly being used for accommodating the electrode assembly, the casing assembly comprising a first electrode lead-out part, the current collecting component comprising a first connection part and a second connection part which are connected, the first connection part being conductively connected to the first tab, the second connection part being weldedly connected to the first electrode lead-out part, and the melting point of the second connection part being closer to the melting point of the first electrode lead-out part than the melting point of the first connection part.

## Description

### TECHNICAL FIELD

This application relates to the field of battery technology, and in particular, to a battery cell, a battery, and an electrical device.

### BACKGROUND

Energy conservation and emission reduction are key to sustainable development of the automobile industry. Electric vehicles have become an important part of the sustainable development of the automobile industry by virtue of energy saving and environmental friendliness. Battery technology is crucial to development of electric vehicles.

In a battery, the current is typically conducted from an electrode plate of the battery to a corresponding electrode lead-out portion through a current collecting component. The current collecting component needs to be electrically connected to a tab and the electrode lead-out portion separately. In the related art, the tab and the electrode lead-out portion are made of different materials. During welding between the current collecting component and the electrode lead-out portion, the quality of the weld at the molten pool is impaired due to a difference in welding performance between different materials, thereby adversely affecting the reliability of the welding bond between the current collecting component and the electrode lead-out portion.

### SUMMARY

This application aims to solve at least one of technical problems in the related art. For this purpose, an objective of this application is to provide a battery cell, a battery, and an electrical device to improve reliability of connection between a current collecting component and an electrode lead-out portion.

According to a first aspect, an embodiment of this application provides a battery cell. The battery cell includes an electrode assembly, a shell assembly, and a current collecting component. The electrode assembly includes a first tab. The shell assembly is configured to accommodate the electrode assembly. The shell assembly includes a first electrode lead-out portion. The current collecting component includes a first connecting portion and a second connecting portion connected to each other. The first connecting portion is welded to the first tab. The second connecting portion is welded to the first electrode lead-out portion. A material of the first connecting portion is different from a material of the second connecting portion. A melting point T2 of the second connecting portion is closer to a melting point T3 of the first electrode lead-out portion than a melting point T1 of the first connecting portion.

In the technical solution according to this embodiment of this application, the current collecting component is a first connecting portion and a second connecting portion connected to each other. The first connecting portion is connected to the first tab. The second connecting portion is welded to the first electrode lead-out portion. The melting point T2 of the second connecting portion is closer to the melting point T3 of the first electrode lead-out portion than the melting point T1 of the first connecting portion. In this way, the second connecting portion and the first electrode lead-out portion can be fused more smoothly when being welded together, thereby alleviating the defect of low quality of a formed molten pool caused by a difference in welding performance between materials, improving the welding quality, and in turn, improving reliability of connection between the current collecting component and the electrode lead-out portion.

In some embodiments, the melting point T2 of the second connecting portion and the melting point T3 of the first electrode lead-out portion satisfy: 0.75 × T3 ≤ T2 ≤ 1.3 × T3. The material of the second connecting portion is defined as such a material that a difference between the melting point of the material and the melting point of the first electrode lead-out portion falls within the specified range, thereby promoting fusion during welding between the second connecting portion and the first electrode lead-out portion, avoiding the problems of immiscibility and blowouts during welding, reducing the welding difficulty, and improving the weld quality.

In some embodiments, the material of the second connecting portion is at least one of chromium, nickel, or steel, and a material of the first electrode lead-out portion is at least one of chromium, nickel, or steel. A material suitable for the welding object is selected, so as to meet the requirements on the welding between the current collecting component and the first electrode lead-out portion, and improve the reliability of the welding bond.

In some embodiments, the material of the second connecting portion is identical to a material of the first electrode lead-out portion. The reliability of welding between identical materials is higher, thereby eliminating the welding defect caused by a difference in welding performance between different materials.

In some embodiments, the first connecting portion includes a first metal layer and a first fluxing layer. The first fluxing layer is disposed on a surface of the first metal layer. The fluxing layer is beneficial to reducing welding defects and improving the welding quality and the reliability of the welding bond.

In some embodiments, the first fluxing layer is disposed on a surface of the first metal layer, the surface being oriented toward the first tab; and/or, the first connecting portion is welded to the second connecting portion, and at least a part of the first fluxing layer is disposed on a surface of the first metal layer, the surface being oriented toward the second connecting portion. The fluxing layer disposed on the surface of the welding region can alleviate the welding defects caused by material differences, and improve the weld quality.

In some embodiments, the second connecting portion includes a second metal layer and a second fluxing layer. The second fluxing layer is disposed on a surface of the second metal layer. The second fluxing layer disposed on the surface of the second metal layer facilitates the welding between the second metal layer and other components, and improves the weld quality.

In some embodiments, the second fluxing layer is disposed on a surface of the second metal layer, the surface being oriented toward the first electrode lead-out portion; and/or, the first connecting portion is welded to the second connecting portion, and at least a part of the second fluxing layer is disposed on a surface of the second metal layer, the surface being oriented toward the first connecting portion. The fluxing layer disposed on the surface of the welding region can alleviate the welding defects caused by material differences, and improve the weld quality.

In some embodiments, the shell assembly includes a housing and an end cap. In the housing, an accommodation space and an opening are formed. The accommodation space is configured to accommodate the electrode assembly, and the opening is located at one end of the accommodation space. The end cap is connected to the housing to fit and cover the opening. The first electrode lead-out portion is the housing or the end cap. The housing and end cap disposed separately can more effectively meet the requirement of accommodating the electrode assembly. Used as the first electrode lead-out portion, the housing or end cap can simplify the structure of the battery.

In some embodiments, the second connecting portion is located between the first connecting portion and the end cap. The end cap includes an abutment portion. The abutment portion contacts the second connecting portion. The second connecting portion is welded to the first connecting portion and the abutment portion separately. The second connecting portion contacts and is welded to the abutment portion of the end cap, thereby reducing the height at which the second connecting portion aligns with the housing along the first direction parallel to the axial direction of the electrode assembly, and in turn, reducing the occupation of the accommodation space in the shell assembly, and improving the capacity density of the battery cell.

In some embodiments, the second connecting portion is welded to the abutment portion to form a first fusion-bonding portion. Along a first direction parallel to an axial direction of the electrode assembly, a depth of the first fusion-bonding portion is less than a sum of a thickness of the second connecting portion and a thickness of the abutment portion. The depth of the first fusion-bonding portion is less than the sum of the thickness of the second connecting portion and the thickness of the abutment portion, so that the first fusion-bonding portion can implement the welding between the second connecting portion and the abutment portion without penetrating the second connecting portion to damage the electrode assembly.

In some embodiments, the end cap includes an end cap body and a protruding portion that protrudes beyond the end cap body toward the electrode assembly. The end cap body is connected to the protruding portion. A concave portion is formed on one side of the protruding portion, the side being oriented away from the electrode assembly. The abutment portion is located on a bottom wall of the protruding portion. The abutment portion protrudes toward the interior of the accommodation space, thereby facilitating contact with the second connecting portion, reducing the clearance between the end cap and the second connecting portion, and alleviating the poor weld caused by the clearance.

In some embodiments, the second connecting portion includes a vertical edge portion connected to the first connecting portion and extending along a first direction parallel to an axial direction of the electrode assembly. An outer side of the vertical edge portion is welded to the housing to form a first fusion-bonding portion. The vertical edge portion aligning with the inner side of the housing is disposed on the second connecting portion, thereby making it convenient to align and weld the second connecting portion with the housing, improving the alignment precision, facilitating the welding equipment to perform the welding, and improving the welding quality.

In some embodiments, the first fusion-bonding portion is configured to be formed by a laser beam penetrating the housing from outside the housing and melting a part of the vertical edge portion. The external laser welding enables the laser welding equipment to be arranged in a larger space. The laser beam can perform welding along a direction parallel to the housing surface, thereby reducing the height of the first fusion-bonding portion along the first direction parallel to the axial direction of the electrode assembly, and in turn, reducing the height at which the vertical edge portion aligns with the housing, and reducing the capacity loss of the battery.

In some embodiments, along a second direction perpendicular to the axial direction of the electrode assembly, a thickness d3 of the vertical edge portion and a thickness d2 of the housing satisfy: d3/d2 ≥ 0.25. When the thickness d3 of the vertical edge portion and the thickness d2 of the housing satisfy: d3/d2 ≥ 0.25, reliable electrical connection is implemented between the current collecting component and the housing while minimizing the adverse effect on the connection between the current collecting component and the first tab.

In some embodiments, the thickness d2 of the housing satisfies: 0.3 mm ≤ d2 ≤ 0.65 mm, and the thickness d3 of the vertical edge portion satisfies: 0.1 mm ≤ d3 ≤ 0.6 mm. The thickness of the housing and the thickness of the vertical edge portion are set to fall within an appropriate range, thereby achieving a high level of the battery strength, energy density, and the performance of welding between the current collecting component and the housing concurrently, and improving the overall performance of the battery.

In some embodiments, along a second direction, a depth a of the first fusion-bonding portion, a thickness d3 of the vertical edge portion, and a thickness d2 of the housing satisfy: a < d2 + d3. By controlling the molten pool depth of the first fusion-bonding portion to be less than the sum of the thickness of the vertical edge portion and the thickness of the housing, this application can prevent the first fusion-bonding portion from penetrating the vertical edge portion.

In some embodiments, a width b of the first fusion-bonding portion along the first direction and a depth a of the first fusion-bonding portion along a second direction satisfy: b ≤ a, where the second direction is perpendicular to the axial direction of the electrode assembly. By controlling the width b of the first fusion-bonding portion along the second direction and the depth a of the first fusion-bonding portion along the first direction to satisfy b ≤ a, this application can minimize the dimension of the first fusion-bonding portion along the first direction on the basis of improving the reliability of connection between the current collecting component and the housing, thereby reducing the height at which the vertical edge portion aligns with the housing, and reducing the capacity loss of the battery.

In some embodiments, along the first direction, a width c of a contact region between the vertical edge portion and the housing as well as a width b of the first fusion-bonding portion satisfy: c ≥ b + 0.5 mm. By setting the width c of the contact region between the vertical edge portion and the housing as well as the width b of the first fusion-bonding portion to satisfy c ≥ b + 0.5 mm, this application can well satisfy the dimensional and precision requirements of the welding bond. The resultant first fusion-bonding portion can implement reliable connection.

In some embodiments, a depth a of the first fusion-bonding portion along a second direction, a width b of the first fusion-bonding portion along the first direction, and a width c of a contact region between the second connecting portion and the housing along the first direction satisfy: 0.3 mm ≤ a ≤ 1 mm, 0.1 mm ≤ b ≤ 0.9 mm, and 0.8 mm ≤ c ≤ 4 mm. The second direction is perpendicular to the axial direction of the electrode assembly. The reasonably selected values of the depth a of the first fusion-bonding portion along the first direction, the width b of the first fusion-bonding portion along the second direction, and the width c of the contact region between the second connecting portion and the housing along the second direction can be more conducive to reliable connection implemented by the first fusion-bonding portion formed by welding the vertical edge portion to the housing, and alleviate the capacity loss of the battery concurrently.

In some embodiments, the first fusion-bonding portion is configured to be formed by a laser beam penetrating the vertical edge portion from inside the housing and melting a part of the housing. The connection implemented by internal welding enables direct detection of the position of junction between the current collecting component and the housing, and facilitates welding positioning and welding control, thereby improving the welding quality.

In some embodiments, along a second direction, a thickness d3 of the vertical edge portion and a thickness d2 of the housing satisfy: 0.25 ≤ d3/d2 ≤ 1. The second direction is perpendicular to the axial direction of the electrode assembly. The thicknesses of the housing and the vertical edge portion are set to satisfy 0.25 ≤ d3/d2 ≤ 1, thereby reducing the probability of bum-through of the housing on the basis of implementing reliable connection, and in turn, improving the overall performance of the battery.

In some embodiments, along the first direction, a width c of a contact region between the vertical edge portion and the housing as well as a width b of the first fusion-bonding portion satisfy: c ≥ b + 0.5 mm. When the width c of the contact region between the vertical edge portion and the housing as well as the width b of the first fusion-bonding portion satisfy c ≥ b + 0.5 mm, the precision requirements of the welding positioning can be met, and the capacity loss of the battery can be reduced.

In some embodiments, a width b of the first fusion-bonding portion along the first direction and a depth a of the first fusion-bonding portion along a second direction satisfy: b ≤ a. The second direction is perpendicular to the axial direction of the electrode assembly. When the width b of the first fusion-bonding portion along the second direction and the depth a of the first fusion-bonding portion along the first direction satisfy b ≤ a, it is convenient to fusion-bond the vertical edge portion to the housing that are arranged along the second direction, and at the same time, the space occupied in the height direction is reduced.

In some embodiments, along a second direction, a depth a of the first fusion-bonding portion, a thickness d3 of the vertical edge portion, and a thickness d2 of the housing satisfy: a < d2 + d3. When the depth a of the first fusion-bonding portion, the thickness d3 of the vertical edge portion, and the thickness d2 of the housing satisfy a < d2 + d3, the resultant first fusion-bonding portion is prevented from penetrating the housing during welding, thereby effectively reducing the risk of leakage of an electrolyte solution in the battery cell.

In some embodiments, the thickness d2 of the housing satisfies: 0.3 mm ≤ d2 ≤ 0.65 mm, and the thickness d3 of the vertical edge portion satisfies: 0.1 mm ≤ d3 ≤ 0.4 mm. With the thickness d2 of the housing falling within the range of 0.3 mm ≤ d2 ≤ 0.65 mm, and with the thickness d3 of the vertical edge portion falling within the range of 0.1 mm ≤ d3 ≤ 0.4 mm, this application can achieve a high level of structural strength of the housing, corrosion resistance of the housing, quality of the welding between the housing and the current collecting component, and the energy density of the battery concurrently, and improve the overall performance of the battery.

In some embodiments, a depth a of the first fusion-bonding portion along a second direction, a width b of the first fusion-bonding portion along the first direction, and a width c of a contact region between the second connecting portion and the housing along the first direction satisfy: 0.3 mm ≤ a ≤ 1 mm, 0.3 mm ≤ b ≤ 1 mm, and 0.8 mm ≤ c ≤ 4 mm. The reasonably selected values of the depth a of the first fusion-bonding portion along the second direction, the width b of the first fusion-bonding portion along the first direction, and the width c of the contact region between the second connecting portion and the housing along the first direction can reduce the loss of energy density of the battery on the basis of meeting the welding requirements.

In some embodiments, the first connecting portion includes a transitional connecting portion and a tab connecting portion. The tab connecting portion is welded to the first tab, and the transitional connecting portion is welded to the second connecting portion. The first connecting portion is engineered as a transitional connecting portion and a tab connecting portion connected to each other, so as to be connected to the second connecting portion and the first tab respectively. In this way, each connection structure can be welded independently to avoid mutual interference, thereby maximally ensuring the quality of the welding bond and meeting the flow capacity requirement of the electrical connection.

In some embodiments, the transitional connecting portion is disposed along an outer edge of the tab connecting portion and welded to an inner side of the vertical edge portion. The transitional connecting portion is disposed along the outer edge of the tab connecting portion, thereby further facilitating the connection between the transitional connecting portion and the vertical edge portion as well as the welding between the tab connecting portion and the first tab, and in turn, avoiding mutual interference.

In some embodiments, the second connecting portion further includes a lap portion connected to the vertical edge portion. The lap portion is welded to the transitional connecting portion. By disposing the lap portion that is configured to be welded to the transitional connecting portion of the first connecting portion, this application can implement physical isolation from the first fusion-bonding portion, and prevent the laser beam for welding and forming the first fusion-bonding portion from sputtering out to interfere with the connection between the first connecting portion and the first tab.

In some embodiments, the lap portion includes a first side close to the electrode assembly and a second side away from the electrode assembly. The transitional connecting portion is welded to the first side. The transitional connecting portion is welded to the first side, and the first connecting portion is located on one side of the second connecting portion, the side being closer to the electrode assembly. This arrangement is equivalent to the first connecting portion protruding toward the side on which the electrode assembly is located. In this way, the first connecting portion is made close to the first tab, thereby facilitating the connection between the first connecting portion and the first tab.

In some embodiments, the lap portion is provided with a hollowed portion corresponding to the tab connecting portion. The hollowed portion is configured to allow passage of a laser beam to implement welding between the tab connecting portion and the first tab. The hollowed portion corresponding to the tab connecting portion is disposed on the lap portion, thereby preventing the lap portion from interfering with the welding between the tab connecting portion and the first tab, reducing unnecessary laser energy loss, and improving the welding efficiency and welding quality.

In some embodiments, the hollowed portion includes a plurality of hollowed grooves spaced apart. The hollowed grooves correspond to a position of a weld between the tab connecting portion and the first tab. The hollowed grooves corresponding to the weld between the tab connecting portion and the first tab not only reduce unnecessary energy loss, but the shape of the hollowed grooves can also facilitate positioning of the weld, thereby improving the welding efficiency.

In some embodiments, the lap portion is provided with a hollowed portion corresponding to the tab connecting portion. The lap portion includes a first side close to the electrode assembly, a second side away from the electrode assembly, and an end surface located between the first side and the second side and defining the hollowed portion. The transitional connecting portion is welded to the end surface. The transitional connecting portion is welded to the end surface, so that the current collecting component occupies less accommodation space inside the housing, thereby ensuring a desirable energy density of the battery.

In some embodiments, the transitional connecting portion and the tab connecting portion assume a shape of coplanar flat plates. With the transitional connecting portion and the tab connecting portion being coplanar flat plates, the amount of processing on the first connecting portion is reduced. In addition, the flat-shaped first connecting portion can minimize the dimension of the first connecting portion along the first direction, thereby reducing the adverse effect on the energy density of the battery.

In some embodiments, the lap portion includes a first side close to the electrode assembly and a second side away from the electrode assembly. The transitional connecting portion is welded to the second side. In this embodiment, the transitional connecting portion is welded to the second side, thereby reducing the overall height of the current collecting component along the first direction, and in turn, reducing the space occupied by the current collecting component in the height direction, making the internal structure of the battery housing more compact, and reducing the loss of energy density of the battery.

In some embodiments, the lap portion is provided with a hollowed portion corresponding to the tab connecting portion. One side, close to the electrode assembly, of the tab connecting portion at least partially passes through the hollowed portion to get connected to the first tab. The tab connecting portion at least partially passes through the hollowed region to get connected to the first tab, thereby reducing the welding clearance between the two components, reducing the probability of cold solder joints, and improving the reliability of the welding bond, and in turn, meeting the connection requirements and the electrical flow capacity requirements.

In some embodiments, the electrode assembly includes a second tab of a polarity different from that of the first tab. The first tab and the second tab are located at two ends of the electrode assembly respectively. The shell assembly includes a housing and an end cap. The housing forms an accommodation space configured to accommodate the electrode assembly. The housing includes an end wall located at one end of the accommodation space and an opening located at another end of the accommodation space. The end cap is connected to the housing to fit and cover the opening. The first electrode lead-out portion is the end cap or the housing. The shell assembly further includes a second electrode lead-out portion. The second electrode lead-out portion is inserted in the end wall and electrically connected to the second tab.

According to a second aspect, an embodiment of this application provides a battery. The battery includes the battery cell disclosed in the above embodiment.

According to a third aspect, an embodiment of this application provides an electrical device. The electrical device includes the battery disclosed in the above embodiment. The battery is configured to provide electrical energy.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

Unless otherwise specified, the same reference numerals throughout a plurality of drawings represent the same or similar components or elements. The drawings are not necessarily drawn to scale. Understandably, the drawings merely depict some embodiments of this application, but are not to be intended as any limitation on the scope of this application.
FIG. 1 is a schematic structural diagram of a vehicle according to some embodiments of this application;
FIG. 2 is a schematic exploded view of a battery according to some embodiments of this application;
FIG. 3 is a schematic exploded view of a battery cell according to some embodiments of this application;
FIG. 4 is a cross-sectional view of a battery cell according to some embodiments of this application;
FIG. 5 is a schematic exploded view of a current collecting component according to some embodiments of this application;
FIG. 6 is a cross-sectional view of a battery cell according to some other embodiments of this application;
FIG. 7 is a cross-sectional view of a battery cell according to still some other embodiments of this application;
FIG. 8 is a cross-sectional view of a current collecting component and a top view of the current collecting component from an A direction according to some embodiments of this application;
FIG. 9 is a cross-sectional view of a current collecting component and a top view of the current collecting component from an A direction according to some other embodiments of this application;
FIG. 10 is a cross-sectional view of a current collecting component and a top view of the current collecting component from an A direction according to still some other embodiments of this application;
FIG. 11 is a cross-sectional view of a current collecting component and a top view of the current collecting component from an A direction according to yet some other embodiments of this application;
FIG. 12 is a cross-sectional view of a current collecting component and a top view of the current collecting component from an A direction according to even some other embodiments of this application.

List of reference numerals:
vehicle 1000;
battery 100, controller 200, motor 300;
box 10, first part 11, second part 12;
battery cell 20, electrode assembly 21, first tab 211, second tab 212;
shell assembly 22, first electrode lead-out portion 22A, second electrode lead-out portion 22B, housing 221, sidewall 2211, end wall 2212, end cap 222, abutment portion 2221, end cap body 2222, protruding portion 2223;
current collecting component 23, first connecting portion 231, first metal layer 231A, first fluxing layer 231B, transitional connecting portion 2311, tab connecting portion 2312, second connecting portion 232, first metal layer 232A, first fluxing layer 232B, vertical edge portion 2321, lap portion 2322, first side 2322a, second side 2322b, hollowed portion 2322c, end surface 2322d;
first fusion-bonding portion 24.

### DETAILED DESCRIPTION

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of this application, unless otherwise expressly specified and defined, the technical terms such as "mount", "concatenate", "connect", and "fix" are generic in a broad sense, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art can understand the specific meanings of the terms in some embodiments of this application according to specific situations.

Currently, as can be seen from the market trend, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps soaring with the expansion of the application fields of the power batteries.

The applicant hereof has noticed that a negative tab of an electrode assembly in a battery is typically electrically connected to an electrode lead-out structure (such as a housing) by a current collecting component. The current collecting component is responsible for collecting current from a tab to the housing. Because the current collecting component primarily needs to be of high conductivity, the material of the current collecting component is typically copper or copper-plated nickel. However, the housing needs to be of high strength and corrosion resistance in addition to conductivity, and the material of the housing is typically aluminum alloy, stainless steel, or the like. Therefore, the melting point of the material of the current collecting component differs sharply from the melting point of the material of the housing. During welding, the steel housing and the copper current collecting component are infinitely miscible at high temperature. Because the linear expansion coefficient of copper is appropriately 40% greater than that of steel, the weld formed by the welding between the two types of materials produces large stress due to the shrinkage of the molten pool during the cooling, thereby being prone to generate cracks and impair the reliability of the electrical conduction between the tab and the housing.

To improve the reliability of the connection between the current collecting component and the electrode lead-out portion, the applicant hereof finds through research that, the current collecting component may be engineered as a first connecting portion and a second connecting portion that are connected to each other, so that the first connecting portion and the second connecting portion are connected to a tab and an electrode lead-out portion respectively. The two connecting portions are made of different materials, for example, materials with different melting points. In this way, when the two connecting portions are welded to the tab and the electrode lead-out portion respectively, a more reliable weld can be formed, thereby implementing a reliable current path between the electrode assembly and the electrode lead-out portion.

In addition, the applicant also finds that, on the basis of improving the materials of the first connecting portion and the second connecting portion of the current collecting component, the structural form of the first fusion-bonding portion formed by the second connecting portion and the electrode lead-out portion and the structural form of the current collecting component may be further optimized to improve the weld quality and implement reliable connection while also optimizing the structural layout and dimensional design inside the battery cell, improving the space utilization inside the battery cell, and reducing the capacity loss of the battery.

The battery cell disclosed in embodiments of this application is applicable to, but not limited to use in, electrical devices such as a vehicle, watercraft, or aircraft. A power supply system of the electrical devices may be formed by using the battery cell, the battery, and the like disclosed herein, so as to improve the performance stability of the battery.

An embodiment of this application provides an electrical device powered by a battery. The electrical device may be, but is not limited to, a mobile phone, a tablet, a laptop computer, an electric toy, an electric tool, an electric power cart, an electric vehicle, a ship, a spacecraft, or the like. The electric toy may include stationary or mobile electric toys, such as game console, electric car toy, electric ship toy, electric airplane toy, and the like. The spacecraft may include airplane, rocket, space shuttle, spaceship, and the like.

For ease of description in the following embodiments, a vehicle 1000 is used as an example of the electrical device according to an embodiment of this application.

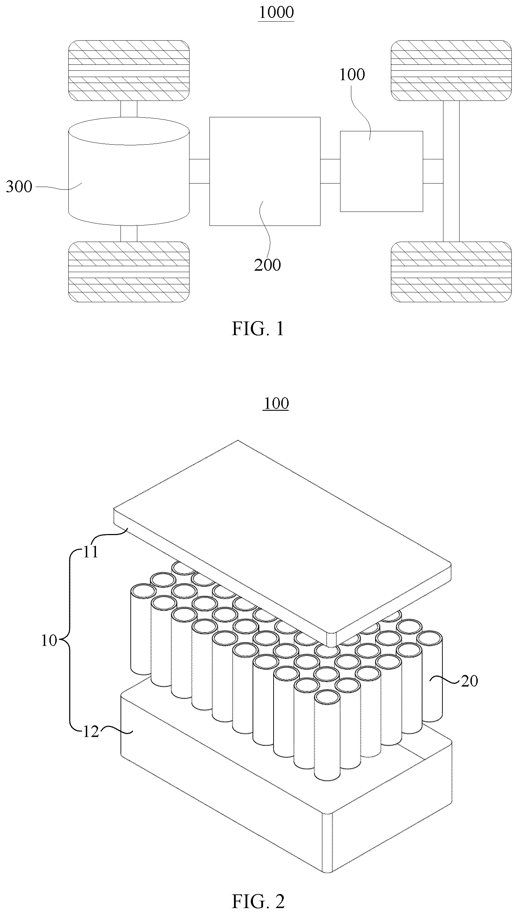

Referring to FIG. 1, FIG. 1 is a schematic structural diagram of a vehicle 1000 according to some embodiments of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a driving power supply of the vehicle 1000 to provide driving power for the vehicle 1000 in place of or partly in place of fuel oil or natural gas.

Referring to FIG. 2, FIG. 2 is an exploded view of a battery 100 according to some embodiments of this application. The battery 100 includes a box 10 and a battery cell 20. The battery cell 20 is accommodated in the box 10. The box 10 is configured to provide an accommodation space for the battery cell 20. The box 10 may be in various structures. In some embodiments, the box 10 may include a first part 11 and a second part 12. The first part 11 and the second part 12 fit and cover each other. The first part 11 and the second part 12 together define an accommodation space configured to accommodate the battery cell 20. The second part 12 may be a hollow structure opened at one end. The first part 11 may be a plate-like structure. The first part 11 fits the opening of the second part 12 so that the first part 11 and the second part 12 together define the accommodation space. Alternatively, both the first part 11 and the second part 12 may be hollow structures opened at one side. The opening of the first part 11 fits the opening of the second part 12. Definitely, the box 10 formed by the first part 11 and the second part 12 may be in various shapes, such as a cylinder or a cuboid.

The battery 100 may contain a plurality of battery cells 20. The plurality of battery cells 20 may be connected in series, parallel, or series-and-parallel pattern. The series-and-parallel pattern means a combination of series connection and parallel connection of the plurality of battery cells 20. The plurality of battery cells 20 may be directly connected in series, parallel, or series-and-parallel pattern, and then the whole of the plurality of battery cells 20 may be accommodated in the box 10. Alternatively, to make up a battery 100, the plurality of battery cells 20 may be connected in series, parallel, or series-and-parallel pattern to form a battery module first, and then a plurality of battery modules are connected in series, parallel, or series-and-parallel pattern to form a whole and accommodated in the box 10. The battery 100 may further include other structures. For example, the battery 100 may further include a busbar component. The busbar component is configured to implement electrical connection between the plurality of battery cells 20.

Each battery cell 20 may be, but is not limited to, a secondary battery or primary battery; or, may be a lithium-sulfur battery, a sodium-ion battery, or a magnesium-ion battery. The battery cell 20 may be in a shape such as a cylinder, a flat body, a cuboid, or other shapes.

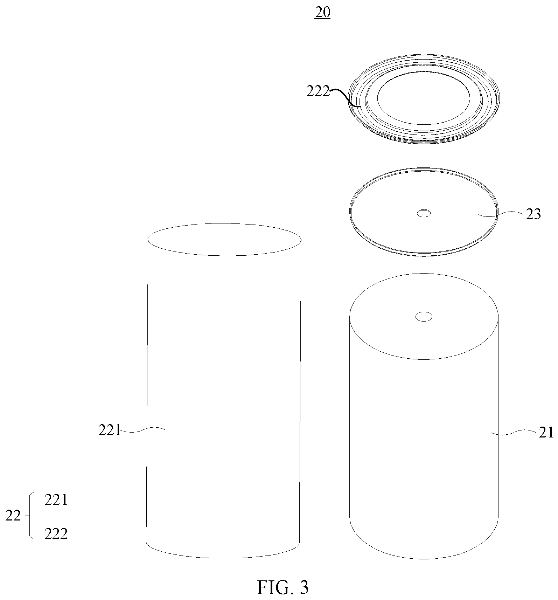

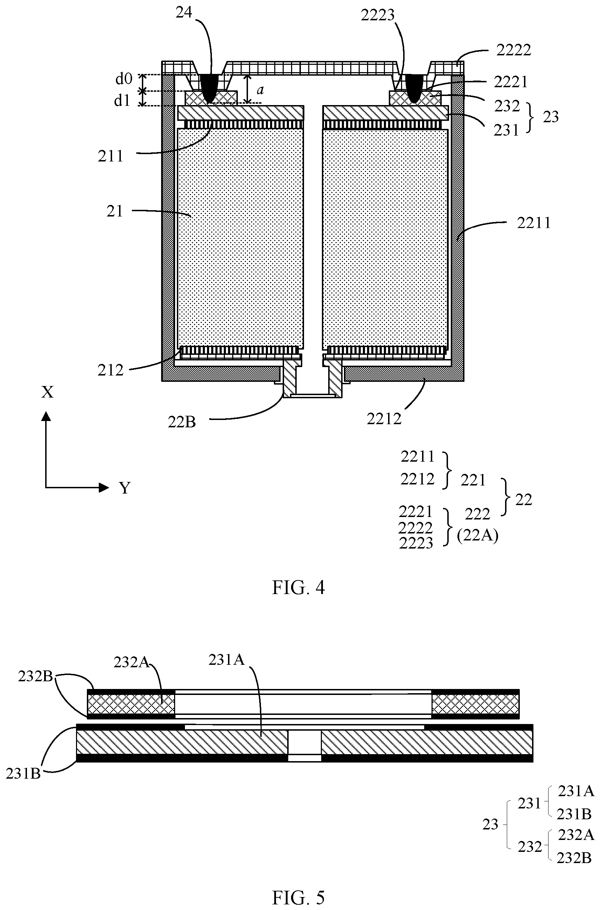

Referring to FIG. 3 to FIG. 5, FIG. 3 is a schematic exploded view of a battery cell 20 according to some embodiments of this application. FIG. 4 is a cross-sectional view of a battery cell 20 according to some embodiments of this application; and FIG. 5 is a schematic exploded view of a current collecting component 23 according to some embodiments of this application.

The battery cell 20 is a minimum unit of a battery. As shown in FIG. 3, the battery cell 20 includes an electrode assembly 21, a shell assembly 22, and a current collecting component 23. The electrode assembly 21 includes a first tab 211. The shell assembly 22 is configured to accommodate the electrode assembly 21. The shell assembly 22 includes a first electrode lead-out portion 22A. The current collecting component 23 includes a first connecting portion 231 and a second connecting portion 232 connected to each other. The first connecting portion 231 is electrically connected to the first tab 211. The second connecting portion 232 is welded to the first electrode lead-out portion 22A of the shell assembly 22. The material of the first connecting portion 231 is different from the material of the second connecting portion 232. The melting point T2 of the second connecting portion 232 is closer to the melting point T3 of the first electrode lead-out portion 22A than the melting point T1 of the first connecting portion 231.

The electrode assembly 21 is a component in which electrochemical reactions occur in the battery cell 20. One or more electrode assemblies 21 may be included in the shell assembly 22. The electrode assembly 21 is typically formed of a positive electrode plate and a negative electrode plate that are wound or stacked together. Generally, a separator is disposed between the positive electrode plate and the negative electrode plate. The parts, coated with an active material, of the positive electrode plate and the negative electrode plate, constitute a body portion of the electrode assembly. The part, coated with no active material, of the positive electrode plate and the negative electrode plate separately, constitutes a tab. The positive tab and the negative tab may be located at one end of the body portion together or at two ends of the body portion respectively. During charge and discharge of a battery, a positive active material and a negative active material react with an electrolyte solution. The tab is connected to a corresponding electrode lead-out portion to form a current loop.

The first tab 211 is connected to the first electrode lead-out portion 22A by the current collecting component 23. In an example, the first tab 211 is a positive tab, and the first electrode lead-out portion 22A is a positive lead-out electrode. In another example, the first tab 211 is a negative tab, and the first electrode lead-out portion 22A is a negative lead-out electrode.

The shell assembly 22 is a component configured to form an internal environment of the battery cell 20. The formed internal environment may be used to accommodate the electrode assembly 21, an electrolyte solution, and other components. The shell assembly 22 may vary in shape and size. For example, the shell assembly is cuboidal, cylindrical, hexagonal prismatic, or the like. Specifically, the shape of the shell assembly 22 may depend on the specific shape and size of the electrode assembly 21. The shell assembly 22 may be made of a variety of materials such as iron, aluminum, stainless steel, or aluminum alloy. The shell assembly 22 includes a housing 221 and an end cap 222. The first electrode lead-out portion 22A may be a conductive component inserted in the housing 221 or end cap 222, such as an electrode post. In some embodiments, the first electrode lead-out portion 22A may be the housing 221 or the end cap 222. In other words, the first tab 211 is electrically connected to the housing 221 or the end cap 222 through the current collecting component 23, so that the housing 221 or the end cap 222 serves as the first electrode lead-out portion 22A of the first tab 211. The first electrode lead-out portion 22A may be a metal layer made of a single material or a metal layer made of different materials, or may be formed by stacking a plurality of materials with different functions.

The current collecting component 23 is a component made of a conductive material and configured to collect current. The current collecting component 23 includes a first connecting portion 231 and a second connecting portion 232 connected to each other. The material of the first connecting portion 231 is different from the material of the second connecting portion 232, meaning that the two connecting portions melt at different melting points. The first connecting portion 231 is electrically connected to the first tab 211, and specifically, may be fixedly connected by welding such as laser welding, ultrasonic welding, or resistance welding. The material of the second connecting portion 232 is different from that of the first connecting portion 231. The second connecting portion 232 is fixedly connected to the first electrode lead-out portion 22A of the shell assembly 22 by welding, and specifically, by laser welding, ultrasonic welding, resistance welding, or the like. The current collecting component 23 is connected to the first tab 211 and the shell assembly 22 by the first connecting portion 231 and the second connecting portion 232 respectively, and collects the current generated by the electrode assembly 21 and then is connected to another electrode lead-out portion to form a current loop.

According to an embodiment of this application, the current collecting component 23 is engineered as a first connecting portion 231 and a second connecting portion 232 connected to each other. The first connecting portion 231 is electrically connected to the first tab 211. The second connecting portion 232 is welded to the first electrode lead-out portion 22A of the shell assembly 22. The melting point T2 of the second connecting portion 232 is closer to the melting point T3 of the first electrode lead-out portion 22A than the melting point T1 of the first connecting portion 231. In this way, the second connecting portion 232 and the first electrode lead-out portion 22A can be fused more smoothly when being welded together, thereby alleviating the defect of low quality of a formed molten pool caused by a difference in welding performance between materials, and improving the welding quality.

In some embodiments, the melting point T2 of the second connecting portion 232 and the melting point T3 of the first electrode lead-out portion 22A satisfy: 0.75 × T3 ≤ T2 ≤ 1.3 × T3.

The material of the second connecting portion 232 is defined as such a material that a ratio of the melting point of the material to the melting point of the first electrode lead-out portion 22A of the shell assembly 22 falls within the specified range, thereby alleviating the poor weld caused by an excessive difference in the melting point between the two materials, promoting fusion during welding between the second connecting portion 232 and the first electrode lead-out portion 22A, avoiding the problems of immiscibility and blowouts during welding, reducing the welding difficulty, and improving the weld quality.

In some embodiments, the material of the second connecting portion 232 is at least one of chromium, nickel, or steel, and a material of the first electrode lead-out portion 22A is at least one of chromium, nickel, or steel.

To enable smooth fusion between the second connecting portion 232 and the first electrode lead-out portion 22A, the material of the second connecting portion 232 is made to be at least one of chromium, nickel, or steel, and the material of the first electrode lead-out portion 22A is made to be at least one of chromium, nickel, or steel, thereby improving the quality of welding between the current collecting component 23 and the shell assembly 22, and improving the reliability of the welding bond.

In some embodiments, the material of the second connecting portion 232 is identical to the material of the first electrode lead-out portion 22A.

The components of the same material are of the same welding performance, thereby avoiding various poor welds caused by the difference in the welding performance between the components, thereby improving the reliability of the weld between the current collecting component 23 and the first electrode lead-out portion 22A of the shell assembly 22.

In some embodiments, referring to FIG. 5, the first connecting portion 231 of the current collecting component 23 includes a first metal layer 231A and a first fluxing layer 231B. The first fluxing layer 231B is disposed on a surface of the first metal layer 231A.

The first fluxing layer 231B and the first metal layer 231A are two parts stacked along a thickness direction of the first connecting portion 231. The fluxing layer can assist welding in a welding process to improve the quality of the formed weld. The first fluxing layer 231B may be formed on the surface of the first metal layer 231A by electroplating. The first metal layer 231A may be plated with the fluxing layer on the entire surface. Alternatively, the surface of a welding region may be plated with the fluxing layer based on the specific welding position and material, so as to facilitate welding.

The fluxing layer is beneficial to reducing welding defects. The first fluxing layer 231B disposed on the surface of the first metal layer 231A can improve the welding quality and the reliability of the welding bond.

In some embodiments, the first fluxing layer 231B is disposed on a surface of the first metal layer 231A, the surface being oriented toward the first tab 211; and/or, the first connecting portion 231 is welded to the second connecting portion 232, and at least a part of the first fluxing layer 231B is disposed on a surface of the first metal layer 231A, the surface being oriented toward the second connecting portion 232.

The first metal layer 231A may not only be welded to the first tab 211, but also be welded to the second connecting portion 232. Considering the dissimilarities of welding properties such as melting point, laser absorptivity, and linear expansion coefficient between different materials, the first fluxing layer 231B may be disposed on the surface of a target welding position on the first metal layer 231A based on the materials of and the requirements of welding between the first metal layer 231A and the welding object.

The fluxing layer disposed on the surface of the welding region can alleviate the welding defects caused by the difference in the welding properties between the materials, and improve the quality of the weld between the first connecting portion 231 and the first tab 211 and/or the second connecting portion 232.

In some embodiments, the second connecting portion 232 of the current collecting component 23 includes a second metal layer 232A and a second fluxing layer 232B. The second fluxing layer 232B is disposed on a surface of the second metal layer 232A.

The second connecting portion 232 is connected to the shell assembly 22 by welding to form a reliable electrical connection. The second connecting portion 232 may also be connected to the first connecting portion 231 by welding to form a fixed electrical connection. The second fluxing layer 232B is disposed on the surface of the second metal layer 232A, so that the second fluxing layer 232B and the second metal layer 232A are two parts stacked along the thickness direction of the second connecting portion 232. In one example, the second fluxing layer 232B may be a nickel-plated layer formed by electroplating.

The second fluxing layer 232B disposed on the surface of the second metal layer 232A facilitates the welding between the second metal layer 232A and other components, and improves the weld quality.

In some embodiments, the second fluxing layer 232B is disposed on a surface of the second metal layer 232A, the surface being oriented toward the first electrode lead-out portion 22A; and/or, the first connecting portion 231 is welded to the second connecting portion 232, and at least a part of the second fluxing layer 232B is disposed on a surface of the second metal layer 232A, the surface being oriented toward the first connecting portion 231.

The second metal layer 232A may be welded to the first electrode lead-out portion 22A of the shell assembly 22, or welded to the first connecting portion 231. The second fluxing layer 232B may be disposed on a surface of the second metal layer 232A on a side welded to the first electrode lead-out portion 22A, and/or, the second fluxing layer 232B may be disposed on a surface of the second metal layer 232A on a side welded to the first connecting portion 231. In an example, the two surfaces of the second metal layer 232A on the two opposite sides are welded to the first connecting portion 231 and the first electrode lead-out portion 22A respectively, and the second fluxing layer 232B is disposed on the surfaces of the second metal layer 232A on the two sides correspondingly, so as to be configured to be welded to the first connecting portion 231 and the first electrode lead-out portion 22A respectively.

The fluxing layer disposed on the surface of the welding region can alleviate the welding defects caused by the difference in the welding properties between the materials, and improve the quality of the weld between the second connecting portion 232 and the shell assembly 22 and/or the first connecting portion 231.

In some embodiments, the shell assembly 22 includes a housing 221 and an end cap 222. In the housing 221, an accommodation space and an opening are formed. The accommodation space is configured to accommodate the electrode assembly 21, and the opening is located at one end of the accommodation space. The end cap 222 is connected to the housing 221 to fit and cover the opening. The first electrode lead-out portion 22A may be the housing 221 or the end cap 222.

The housing 221 may include a sidewall 2211 and an end wall 2212 located at one end of the sidewall 2211. The sidewall 2211 and the end wall 2212 may be formed in one piece by stamping or formed in separate pieces by welding. The sidewall 2211 and the end wall 2212 close in together to form an accommodation space configured to accommodate the electrode assembly 21. One end of the accommodation space is the end wall 2212, and another end opposite to the end wall 2212 is the opening.

The end cap 222 is a component that fits and covers the opening of the housing 221 to isolate the internal environment of the battery cell 20 from the external environment. The housing 221 and the end cap 222 may be stand-alone components. An opening may be created on the housing 221. At the opening, the end cap 222 fits and covers the opening to form the internal environment of the battery cell 20. Without limitation, the end cap 222 and the housing 221 may be integrated instead. Specifically, the end cap 222 and the housing 221 may form a common connection interface before other components are put into the housing. Subsequently, when the interior of the housing 221 needs to be sealed, the end cap 222 is made to fit with the housing 221. Without limitation, the shape of the end cap 222 may be adapted to the shape of the housing 221 to fit the housing 221. Optionally, the end cap 222 may be made of a material of appropriate hardness and strength (such as aluminum alloy), so that the end cap 222 is not prone to deform when squeezed or impacted. In this way, the battery cell 20 achieves higher structural strength and higher safety performance.

The housing 221 and end cap 222 disposed separately can more effectively meet the requirement of accommodating the electrode assembly 21. Used as the first electrode lead-out portion 22A, the housing 221 or end cap 222 can simplify the structure of the battery.

In some embodiments, as shown in FIG. 4, the second connecting portion 232 is located between the first connecting portion 231 and the end cap 222. The end cap 222 includes an abutment portion 2221. The abutment portion 2221 contacts the second connecting portion 232. The second connecting portion 232 is welded to the first connecting portion 231 and the abutment portion 2221 separately.

The abutment portion 2221 is a part of the end cap 222, the part being configured to be connected to the second connecting portion 232. For example, the end cap 222 is flat plate-shaped, and the abutment portion 2221 may be a partial region, in contact with the second connecting portion, in the flat plate. The second connecting portion 232 is located between the first connecting portion 231 and the end cap 222, so that the two side surfaces of the second connecting portion 232 are welded to the first connecting portion 231 and the end cap 222 respectively. In an example, the second connecting portion 232 is flat plate-shaped. A surface of the second connecting portion 232 on a side close to the electrode assembly 21 is welded to the first connecting portion 231, and a surface of the second connecting portion 232 on a side away from the electrode assembly 21 is welded to the end cap 222. The end cap 222 includes an abutment portion 2221. The abutment portion 2221 is configured to contact the second connecting portion 232 so as to implement electrical connection between the end cap and the second connecting portion after being welded. After the end cap 222 fits and covers the opening, the second connecting portion 232 is located in the accommodation space. A laser beam may be radiated from outside to, and penetrate, the abutment portion 2221, and melt a part of the second connecting portion 232, the part being in contact with the abutment portion 2221. In this way, a molten weld is formed between the contact surface between the abutment portion 2221 and the second connecting portion 232. In this embodiment, the end cap 222 serves as a first electrode lead-out portion 22A.

By being welded to the abutment portion 2221, the second connecting portion 232 can collect the current of the electrode assembly 21 and conduct the current to the end cap 222. The end cap 222 may also be electrically connected to the housing 221, so that the housing 221 can serve as a second electrode lead-out portion of the electrode assembly. The second connecting portion 232 is welded to the end cap 222, thereby reducing the required height of the second connecting portion 232 along the first direction X parallel to the axial direction of the electrode assembly, and in turn, reducing the occupation of the accommodation space in the shell assembly 22, and improving the capacity density of the battery cell 20.

In some embodiments, as shown in FIG. 4, the second connecting portion 232 is welded to the abutment portion 2221 to form a first fusion-bonding portion 24. Along the first direction X parallel to the axial direction of the electrode assembly, the depth a of the first fusion-bonding portion 24 is less than a sum of the thickness d1 of the second connecting portion 232 and the thickness d0 of the abutment portion 2221, that is, a < d0 + d1.

The abutment portion 2221 is a part in contact with the second connecting portion 232 to implement welding. The thickness d0 of the abutment portion 2221 is the thickness of a part, welded to the second connecting portion 232, of the abutment portion along the first direction X. The thickness d1 of the second connecting portion 232 means the thickness of a part, welded to the abutment portion 2221, of the second connecting portion 232 along the first direction X. The depth a of the first fusion-bonding portion 24 means a maximum melting depth of the first fusion-bonding portion 24 along the first direction.

The depth a of the first fusion-bonding portion 24 is less than the sum of the thickness d1 of the second connecting portion 232 and the thickness d0 of the abutment portion 2221, so that the first fusion-bonding portion 24 can implement the welding between the second connecting portion 232 and the abutment portion 2221 without penetrating the second connecting portion 232 to damage the electrode assembly 21.

In some embodiments, as shown in FIG. 4, the end cap 222 includes an end cap body 2222 and a protruding portion 2223 that protrudes beyond the end cap body 2222 toward the electrode assembly 21. The end cap body is connected to the protruding portion. A concave portion (not shown in the drawings) is formed on one side of the protruding portion 2223, the side being oriented away from the electrode assembly 21. The abutment portion 2221 is located on a bottom wall of the protruding portion 2223.

The end cap 222 is plate-shaped on the whole. The end cap body 2222 and the protruding portion 2223 are different parts of the end cap 222 delineated along a direction perpendicular to the thickness direction. One side, close to the electrode assembly 21, of the protruding portion 2223 protrudes toward the electrode assembly 21. One side, away from the electrode assembly 21, of the protruding portion is recessed toward the electrode assembly 21 to form a concave portion. The protruding portion 2223 includes a bottom wall away from the end cap body 2222, and a connecting wall that connects the bottom wall and the end cap body 2222. The abutment portion 2221 is located on the bottom wall of the protruding portion 2223. Specifically, the abutment portion 2221 may be a part of the bottom wall of the protruding portion 2223, or the entire bottom wall.

The abutment portion 2221 being located on the bottom wall of the protruding portion 2223 makes the abutment portion 2221 protrude toward the interior of the accommodation space, thereby facilitating contact with the second connecting portion 232, reducing the clearance between the end cap 222 and the second connecting portion 232, and alleviating the poor weld caused by the clearance.

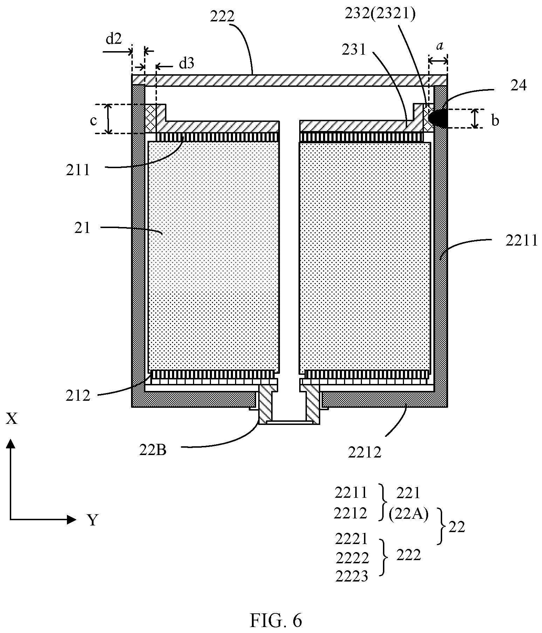

Referring to FIG. 6, FIG. 6 is a cross-sectional view of a battery cell 20 according to some other embodiments of this application. In some embodiments, the second connecting portion 232 of the current collecting component 23 includes a vertical edge portion 2321 connected to the first connecting portion 231 and extending along a first direction X parallel to an axial direction of the electrode assembly. An outer side of the vertical edge portion 2321 is welded to the housing 221 to form a first fusion-bonding portion 24.

The first direction X is parallel to the axial direction of the electrode assembly 21, and the second direction Y is perpendicular to the axial direction of the electrode assembly 21. The vertical edge portion 2321 extends along the first direction X, and the shape of the vertical edge portion 2321 is the same as the shape of the housing 221, and may be cylindrical, cuboidal, or the like. The outer side of the vertical edge portion 2321 of the second connecting portion 232 fits and aligns with the inner surface of the housing 221, so as to enable the current collecting component 23 to align with the housing 221, and facilitate the welding equipment to implement the welding between the current collecting component and the housing to form the first fusion-bonding portion 24. In these embodiments, the housing 221 serves as a first electrode lead-out portion 22A.

A vertical edge portion 2321 aligning with the inner side of the housing 221 is disposed on the second connecting portion 232, thereby facilitating alignment and welding between the second connecting portion 232 and the housing 221, improving the alignment precision, facilitating the welding equipment to perform the welding, and improving the welding quality.

In some embodiments, the first fusion-bonding portion 24 is configured to be formed by a laser beam penetrating the housing 221 from outside the housing 221 and melting a part of the vertical edge portion 2321.

In this embodiment, the welding is performed by laser welding. The laser welding is a process by which a high-intensity laser beam is radiated to a metal surface to melt the metal and form a weld through the interaction between the laser beam and the metal. The laser welding is characterized by high concentration of energy density, extremely fast heating and cooling speed during welding, a small heat-affected zone, and high efficiency.

The first fusion-bonding portion 24 between the housing 221 and the second connecting portion 232 may be formed by external welding. To be specific, a laser generator is located outside a battery cell and emits a laser beam directed to the surface of the housing 221. The energy of the laser beam penetrates the housing 221 and melts a part of the vertical edge portion 2321. A specific welding process is: First, mounting and aligning the housing 221 and the vertical edge portion 2321 together as two workpieces, and then radiating a laser beam directionally to a surface of the housing 221 at a position corresponding to the vertical edge portion 2321. The laser beam penetrates the housing 221 and is then absorbed by the material of the vertical edge portion 2321. The laser energy causes the penetrated part of the housing 221 and the corresponding surface of the vertical edge portion 2321 on a side close to the housing 221 to melt and bond together to form a first fusion-bonding portion 24.

In an example, the laser beam is radiated to the housing 221 and the vertical edge portion 2321 along a direction perpendicular to the surface of the housing 221 to form the first fusion-bonding portion 24. In this case, the width of the first fusion-bonding portion 24 is a maximum dimension of the first fusion-bonding portion 24 along the first direction X.

The external welding enables the laser welding equipment to be arranged in a larger space. The laser beam can perform welding along a direction parallel to the housing surface, thereby reducing the height of the first fusion-bonding portion 24 along the first direction X parallel to the axial direction of the electrode assembly 21, and in turn, reducing the height at which the vertical edge portion 2321 aligns with the housing 221, and reducing the capacity loss of the battery.

In some embodiments, along a second direction Y, the thickness d3 of the vertical edge portion 2321 and the thickness d2 of the housing 221 satisfy: d3/d2 ≥ 0.25.

The vertical edge portion 2321 is connected to the first connecting portion 231. In order to prevent the laser beam from penetrating the vertical edge portion 2321 and affecting the nearby first connecting portion 231 during the welding between the vertical edge portion 2321 and the housing 221, the vertical edge portion 2321 needs to meet a specified thickness requirement. When the thickness d3 of the vertical edge portion 2321 and the thickness d2 of the housing satisfy d3/d2 ≥ 0.25, reliable electrical connection is implemented between the current collecting component 23 and the housing 221 while minimizing the adverse effect on the connection between the current collecting component 23 and the first tab 211. As an example, the thickness d3 of the vertical edge portion 2321 and the thickness d2 of the housing 221 may further satisfy: d3/d2 ≥ 0.5, thereby further preventing the laser beam from passing through the second connecting portion 232 to adversely affect the connection between the first connecting portion 231 and the first tab 211 or even damage the electrode assembly 21.

In some embodiments, the thickness d2 of the housing 221 satisfies: 0.3 mm ≤ d2 ≤ 0.65 mm, and the thickness d3 of the vertical edge portion 2321 satisfies: 0.1 mm ≤ d3 ≤ 0.6 mm.

The battery housing accommodates various components and an electrolyte solution. The housing 221 needs to be thick enough to meet the strength requirement and the corrosion resistance requirement of the housing. At the same time, the housing 221 needs to avoid being so thick as to impair the energy density of the battery. Therefore, the thickness d2 of the housing 221 is set to fall within the range of 0.3 mm ≤ d2 ≤ 0.65 mm, thereby meeting both the strength requirement and the energy density requirement of the battery. The vertical edge portion 2321 needs to be thick enough for welding with the housing 221. At the same time, the vertical edge portion 2321 needs to avoid being so thick as to impair the energy density of the battery. Therefore, the thickness d3 of the vertical edge portion is set to fall within the range of 0.1 mm ≤ d3 ≤ 0.6 mm, thereby achieving a desirable level of the performance of welding between the current collecting component 23 and the housing 221 as well as the energy density of the battery.

In some embodiments, along a second direction Y, the depth a of the first fusion-bonding portion 24, the thickness d3 of the vertical edge portion 2321, and the thickness d2 of the housing 221 satisfy: a < d2 + d3.

By controlling the depth a of the first fusion-bonding portion 24 to be less than the sum of the thickness d3 of the vertical edge portion 2321 and the thickness d2 of the housing 221, this application can prevent the first fusion-bonding portion 24 from penetrating the vertical edge portion 2321, thereby avoiding an adverse effect caused by the laser beam to other components in the housing.

In some embodiments, along the first direction X, the width of the first fusion-bonding portion 24 is b; and, along the second direction Y, the depth of the first fusion-bonding portion 24 is a. The values of a and b satisfy: b ≤ a.

The housing 221 is located outside the vertical edge portion 2321. The first fusion-bonding portion 24 formed by external laser welding is a deep fusion weld. The width of the first fusion-bonding portion 24 is defined to be less than the depth, thereby minimizing the dimension of the first fusion-bonding portion 24 along the first direction X on the basis of improving the reliability of connection between the current collecting component 23 and the housing 221, thereby reducing the height at which the vertical edge portion 2321 aligns with the housing 221, and reducing the capacity loss of the battery.

In some embodiments, along the first direction X, the width c of a contact region between the vertical edge portion 2321 and the housing 221 as well as the width b of the first fusion-bonding portion 24 satisfy: c ≥ b + +0.5 mm.

Due to the limited processing precision of the components and the errors caused by the positioning precision, it is difficult to ensure that the laser exactly follows the preset welding path during welding. To prevent the dimensional error, alignment error, and welding precision control error from disrupting the formation of the first fusion-bonding portion 24, it is necessary to set the width c of the contact region between the vertical edge portion 2321 and the housing 221 to be greater than the width b of the first fusion-bonding portion 24, so as to provide a margin of misalignment for laser welding. This can reduce the precision requirements on dimensions, alignment, and laser welding path control. Even if the laser is misaligned to some extent, the first fusion-bonding portion 24 can still be well formed to implement reliable connection.

Through research, it is found that, by setting the width c of the contact region between the vertical edge portion 2321 and the housing 221 as well as the width b of the first fusion-bonding portion 24 to satisfy c ≥ b + 0.5 mm, this application can well meet the dimensional and precision requirements of the welding bond. The resultant first fusion-bonding portion 24 can implement reliable connection. In another embodiment, the width c of the contact region between the vertical edge portion 2321 and the housing 221 as well as the width b of the first fusion-bonding portion 24 may satisfy: c ≥ b + 1 mm. In this way, the contact region between the vertical edge portion 2321 and the housing 221 is large enough to provide a larger misalignment margin, reduce cold solder joints and solder skips caused by the misalignment, and improve the quality and connection reliability of the formed first fusion-bonding portion 24.

In some embodiments, the depth a of the first fusion-bonding portion 24 along the second direction Y, the width b of the first fusion-bonding portion 24 along the first direction X, and the width c of the contact region between the vertical edge portion 2321 and the housing 221 along the first direction X satisfy: 0.3 mm ≤ a ≤ 1 mm, 0.1 mm ≤ b ≤ 0.9 mm, and 0.8 mm ≤ c ≤ 4 mm.

Through a plurality of experiments on the weld between the current collecting component and the housing, considering more factors such as laser power, welding speed, and weld materials and dimensions comprehensively, it is hereby defined that the depth a of the first fusion-bonding portion 24 along the second direction Y satisfies 0.3 mm ≤ a ≤ 1 mm, the width b of the first fusion-bonding portion 24 along the first direction X satisfies 0.1 mm ≤ b ≤ 0.9 mm, and the width c of the contact region between the vertical edge portion 2321 and the housing 221 along the first direction X satisfies 0.8 mm ≤ c ≤ 4 mm, thereby more favorably implementing reliable connection by means of the first fusion-bonding portion formed by the weld between the vertical edge portion 2321 and the housing 221, and reducing the capacity loss of the battery at the same time.

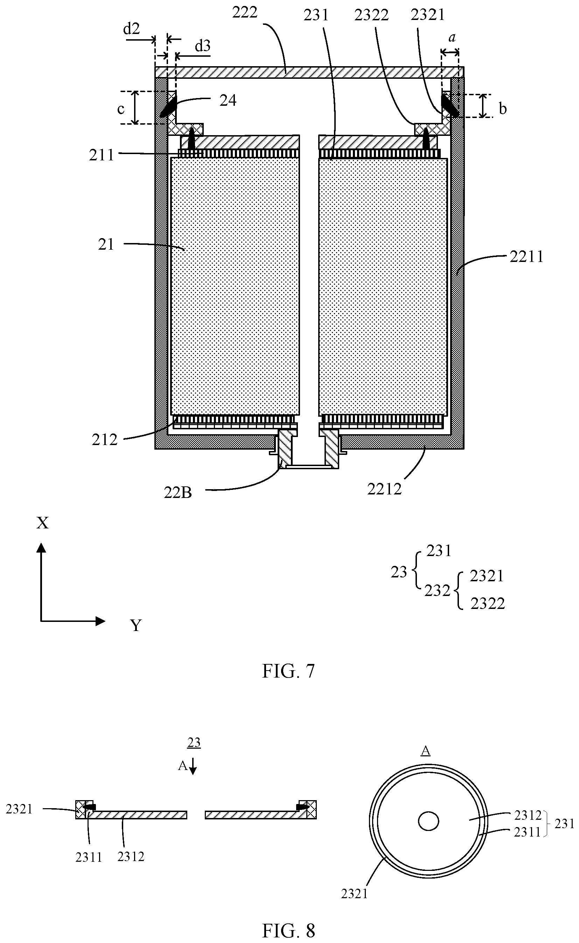

FIG. 7 is a cross-sectional view of a battery cell according to still some other embodiments of this application. Referring to FIG. 7, in some embodiments, the first fusion-bonding portion 24 is configured to be formed by a laser beam penetrating the vertical edge portion 2321 from inside the housing 221 and melting a part of the housing 221.

In this embodiment, the first fusion-bonding portion 24 is formed by internal laser welding. During the internal welding, the laser beam is mostly radiated to the current collecting component 23 and the housing 221 at a specified tilt angle (non-vertical). The laser energy increases the temperature of the material of the housing 221, melts the vertical edge portion 2321 and a part of the housing 221, and welds the vertical edge portion 2321 and the part of the housing 221 together to form a butt weld or a penetration weld.

When the current collecting component and the housing are welded by internal laser welding, due to the limited space inside the housing, the laser beam needs to be angled toward the welding position, and the battery cell or laser beam needs to be rotated during the welding to form a butt weld or a penetration weld circumferentially. The laser absorptivity of copper is low, and therefore, a large power is required to form a molten pool of copper during welding. However, the laser absorptivity of steel is high, and a much smaller power is required to form a molten pool of steel during welding. At a preset welding power, only one of butt welding or penetration welding can be implemented. When the laser welding position is misaligned from the junction between the current collecting component and the housing, a cold solder joint occurs, thereby impairing the reliability of the connection. Therefore, to implement alignment between the current collecting component and the housing, the vertical edge of a sufficient height is required for aligning with the housing. In this way, the adverse effect caused by the fluctuation of the alignment precision to the welding can be controlled, but excessive internal space of the battery is occupied, thereby impairing the energy density of the battery.

In this embodiment, the melting point of the second connecting portion is close to that of the housing. During welding, penetration welding may be performed at a preset power, thereby facilitating the formation of a molten pool weld. Even if the laser beam is misaligned, the quality of the formed weld is not impaired. In addition, the required height of the vertical edge for alignment is reduced.

In some embodiments, along a second direction Y, the thickness d3 of the vertical edge portion 2321 and the thickness d2 of the housing 221 satisfy: 0.25 ≤ d3/d2 ≤ 1.

To improve the quality of the first fusion-bonding portion 24 formed by welding the vertical edge portion 2321 to the housing 221 from inside the housing 221, the thicknesses of the housing 221 and the vertical edge portion 2321 are set to satisfy 0.25 ≤ d3/d2 ≤ 1, thereby reducing the probability of burn-through of the housing 221 on the basis of implementing reliable connection, and in turn, improving the overall performance of the battery.

In an example, the thickness d3 of the vertical edge portion 2321 and the thickness d2 of the housing 221 may further satisfy: 0.25 ≤ d3/d2 ≤ 0.75, thereby further reducing the probability of cold solder joints between the vertical edge portion 2321 and the housing 221, and improving the reliability of the welding bond.

In some embodiments, along the first direction X, the width c of a contact region between the vertical edge portion 2321 and the housing 221 as well as the width b of the first fusion-bonding portion satisfy: c ≥ b + 0.5 mm.

Due to the limited processing precision of the components and the errors caused by the positioning precision, it is difficult to ensure that the laser exactly follows the preset welding path during welding. To prevent the dimensional error, alignment error, and welding precision control error from disrupting the formation of the first fusion-bonding portion 24, it is necessary to set the width c of the contact region between the vertical edge portion 2321 and the housing 221 to be greater than the width b of the first fusion-bonding portion 24, so as to provide a margin of misalignment for laser welding. This can reduce the precision requirements on dimensions, alignment, and laser welding path control. Even if the laser is misaligned to some extent, the first fusion-bonding portion 24 can still be well formed to implement reliable connection.

In an example, the width c of the contact region between the vertical edge portion 2321 and the housing 221 as well as the width b of the first fusion-bonding portion 24 may further satisfy: c ≥ b + 1 mm, thereby allowing a greater welding error during welding, and improving the welding efficiency.

In some embodiments, the width b of the first fusion-bonding portion 24 along the first direction X and the depth a of the first fusion-bonding portion 24 along the second direction Y satisfy: b ≤ a.

When the width b of the first fusion-bonding portion 24 along the first direction X and the depth a of the first fusion-bonding portion 24 along the second direction Y satisfy b ≤ a, the first fusion-bonding portion 24 exhibits a narrow and deep molten weld. This type of weld is beneficial to reducing the maximum dimension of the width b of the first fusion-bonding portion 24 along the first direction, thereby reducing the height of alignment between the second connecting portion 232 and the housing 221 along the first direction X, and on this basis, reducing the space occupied in the accommodating space.

In some embodiments, along the second direction Y perpendicular to the axis of the electrode assembly, the depth a of the first fusion-bonding portion 24, the thickness d3 of the vertical edge portion 2321, and the thickness d2 of the housing 221 satisfy: a < d2 + d3.

It is defined that the depth a of the first fusion-bonding portion 24, the thickness d3 of the vertical edge portion 2321, and the thickness d2 of the housing 221 satisfy a < d2 + d3. In this way, the resultant first fusion-bonding portion 24 is prevented from penetrating the housing 221 during welding, thereby effectively reducing the risk of leakage of an electrolyte solution in the battery cell 20.

In some embodiments, the thickness d2 of the housing 221 satisfies: 0.3 mm ≤ d2 ≤ 0.65 mm, and the thickness d3 of the vertical edge portion 2321 satisfies: 0.1 mm ≤ d3 ≤ 0.4 mm.

The battery housing accommodates the electrode assembly and the electrolyte solution. The housing 221 needs to be thick enough to meet the strength requirement and the corrosion resistance requirement of the housing. At the same time, the housing 221 needs to avoid being so thick as to impair the energy density of the battery. The vertical edge portion 2321 of the second connecting portion 232 needs to be thick enough for welding with the housing 221. At the same time, the vertical edge portion 2321 needs to avoid being so thick as to impair the welding efficiency and the quality of the formed weld.

In these embodiments, with the thickness d2 of the housing 221 falling within the range of 0.3 mm ≤ d2 ≤ 0.65 mm, and with the thickness d3 of the vertical edge portion 2321 falling within the range of 0.1 mm ≤ d3 ≤ 0.4 mm, this application can achieve a high level of structural strength of the housing, corrosion resistance of the housing, quality of the welding between the housing and the current collecting component, and the energy density of the battery concurrently, and improve the overall performance of the battery.

In some embodiments, the depth a of the first fusion-bonding portion 24 along the second direction Y, the width b of the first fusion-bonding portion 24 along the first direction X, and the width c of the contact region between the second connecting portion 232 and the housing 221 along the first direction X satisfy: 0.3 mm ≤ a ≤ 1 mm, 0.3 mm ≤ b ≤ 1 mm, and 0.8 mm ≤ c ≤ 4 mm.

The dimensional parameters of the first fusion-bonding portion 24 and the width of the contact region exert an important impact on the reliability of the welding bond and the energy density of the battery. The reasonably selected values of the depth a of the first fusion-bonding portion 24 along the second direction Y, the width b of the first fusion-bonding portion 24 along the first direction X, and the width c of the contact region between the second connecting portion 232 and the housing 221 along the first direction X can reduce the loss of energy density of the battery on the basis of meeting the welding requirements.

Referring to FIG. 8 to FIG. 12, FIG. 8 to FIG. 12 are cross-sectional views of a current collecting component 23 and a top view of the current collecting component from an A direction according to some embodiments of this application. In some embodiments, the first connecting portion 231 of the current collecting component 23 includes a transitional connecting portion 2311 and a tab connecting portion 2312 connected to each other. The tab connecting portion 2312 is welded to the first tab 211, and the transitional connecting portion 2311 is welded to the second connecting portion 232.

The transitional connecting portion 2311 and the second connecting portion 232 may assume various structural forms, and may be engineered as separate stand-alone components and formed by various connection methods such as welding, riveting, and threaded connection; or, may be directly formed in one piece, each being a part of the one-piece connecting portion 231. The transitional connecting portion 2311 may be coplanar with the second connecting portion 232 or not.

The transitional connecting portion 2311 may be welded to the second connecting portion 232 by laser welding, ultrasonic welding, friction welding, or resistance welding. In an example, as shown in FIG. 6, the transitional connecting portion 2311 may be directly welded to the inner side of the vertical edge portion 2321 of the second connecting portion 232. In another example, the transitional connecting portion 2311 may be welded to another component or another part of the second connecting portion 232, thereby implementing indirect connection with the vertical edge portion 2321.

The first connecting portion 231 is engineered as a transitional connecting portion 2311 and a tab connecting portion 2312 connected to each other, so as to be connected to the second connecting portion 232 and the first tab 211 respectively. In this way, each connection structure can be welded independently to avoid mutual interference, thereby maximally ensuring the quality of the welding bond and meeting the flow capacity requirement of the electrical connection.

Referring to FIG. 8, in some embodiments, the transitional connecting portion 2311 is disposed along an outer edge of the tab connecting portion 2312 and welded to an inner side of the vertical edge portion 2321.

The vertical edge portion 2321 needs to closely fit and align with the inner side of the housing 221, and the first tab 211 is located at one end close to the opening in the accommodation cavity formed by the housing 221. The transitional connecting portion 2311 is disposed along the outer edge of the tab connecting portion 2312, thereby further facilitating the connection between the transitional connecting portion 2311 and the vertical edge portion 2321 as well as the welding between the tab connecting portion 2312 and the first tab 211, and in turn, avoiding mutual interference.

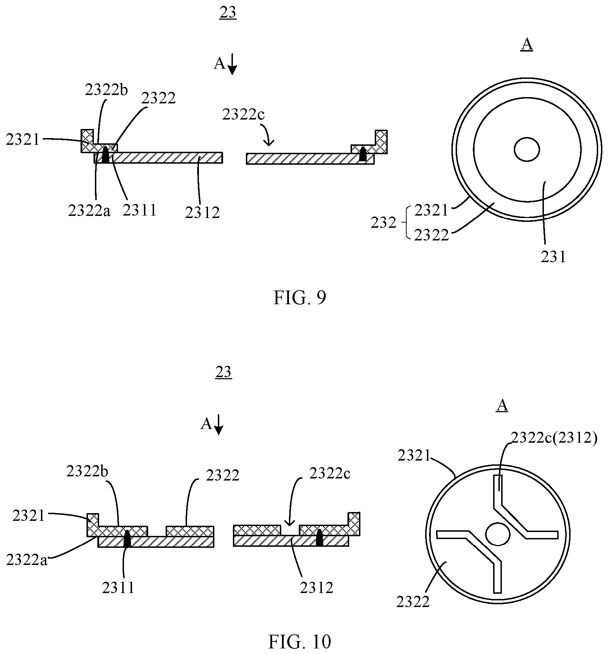

Referring to FIG. 9 to FIG. 12, in some embodiments, the second connecting portion 232 further includes a lap portion 2322 connected to the vertical edge portion 2321. The lap portion 2322 is welded to the transitional connecting portion 2311.

The lap portion 2322 may extend along a direction different from the extension direction of the vertical edge portion 2321. In other words, the lap portion and the vertical edge portion are not coplanar. For example, the lap portion 2322 is in the shape of a flat plate parallel to the second direction Y. The lap portion 2322 and the vertical edge portion 2321 may be independently prepared components, and formed by various connection methods such as welding, riveting, and threaded connection, or may be directly formed in one piece, or may be formed from a single component by machining such as stamping and cutting. For example, a flanged structure formed by stamping one end of the vertical edge portion 2321 is used as the lap portion 2322. The lap portion 2322 is welded to the transitional connecting portion 2311 to implement electrical connection between the first connecting portion 231 and the second connecting portion 232.

By disposing the lap portion 2322 that is configured to be welded to the transitional connecting portion 2311 of the first connecting portion, this application can implement physical isolation from the first fusion-bonding portion 24, and prevent the laser beam for welding and forming the first fusion-bonding portion 24 from sputtering out to interfere with the connection between the first connecting portion 231 and the first tab 211.

Referring to FIG. 9, in some embodiments, the lap portion 2322 includes a first side 2322a close to the electrode assembly 21 and a second side 2322b away from the electrode assembly 21. The transitional connecting portion 2311 is welded to the first side 2322a of the lap portion 2322.

The lap portion 2322 includes a first side 2322a and a second side 2322b opposite to each other. The first side 2322a and the second side 2322b may be planes parallel to the second direction Y, or inclined surfaces or curved surfaces that intersect the second direction Y. The welding bond between the transitional connecting portion 2311 and the first side 2322a means that the first connecting portion 231 is connected to one side of the second connecting portion 232, the side being close to the electrode assembly 21.

The transitional connecting portion 2311 is welded to the first side 2322a, and the first connecting portion 231 is located on one side of the second connecting portion 232, the side being closer to the electrode assembly 21. This arrangement is equivalent to the first connecting portion 231 protruding toward the side on which the electrode assembly 21 is located. In this way, the first connecting portion 231 is made close to the first tab 211, thereby facilitating the connection between the first connecting portion 231 and the first tab 211.

Referring to FIG. 9, in some embodiments, the lap portion 2322 is provided with a hollowed portion 2322c corresponding to the tab connecting portion 2312. The hollowed portion 2322c is configured to allow passage of a laser beam to implement welding between the tab connecting portion 2312 and the first tab 211.

The first connecting portion 231 is located on one side of the lap portion 2322, the side being close to the electrode assembly 21. Therefore, in welding the first connecting portion 231 to the first tab 211, the laser beam needs to pass through the position at which the second connecting portion 232 is located, so as to reach the position of welding between the first connecting portion 231 and the first tab 211. In an example, the lap portion 2322 may be a flat plate parallel to the second direction Y. Based on this, a hollowed region corresponding to the tab connecting portion 2312 is disposed on the lap portion 2322, so as to allow passage of the laser beam and implement the welding bond between the tab connecting portion 2312 and the first tab 211. This welding bond can prevent the lap portion 2322 from interfering with the welding between the tab connecting portion 2312 and the first tab 211, reduce unnecessary loss of laser energy, and improve welding efficiency and welding quality.

Referring to FIG. 10, in some embodiments, the hollowed portion 2322c includes a plurality of hollowed grooves (not marked in the drawing) spaced apart. The hollowed grooves correspond to a position of a weld between the tab connecting portion 2312 and the first tab 211.

The hollowed portion 2322c may include a plurality of hollowed grooves spaced apart. The plurality of hollowed grooves may correspond to the position of welding between the tab connecting portion 2312 and the first tab 211 separately, so as to make it convenient for the laser beam to pass through the lap portion 232 and weld the tab connecting portion 2312 and the first tab 211 together. In an example, the welds between the tab connecting portion 2312 and the first tab 211 are a plurality of rectilinear welds. The rectilinear welds are spaced apart uniformly along a circumference centered on the axis of the electrode assembly 21, and extend along a radial direction. The hollowed portion 2322c may be a pattern formed from a plurality of hollowed grooves adapted to the shape of the weld between the tab connecting portion 2312 and the first tab 211, so as to implement the welding bond between the tab connecting portion 2312 and the first tab 211.

The hollowed grooves corresponding to the weld between the tab connecting portion 2312 and the first tab 211 not only reduce unnecessary energy loss, but the shape of the hollowed grooves can also facilitate positioning of the weld, thereby improving the welding efficiency.

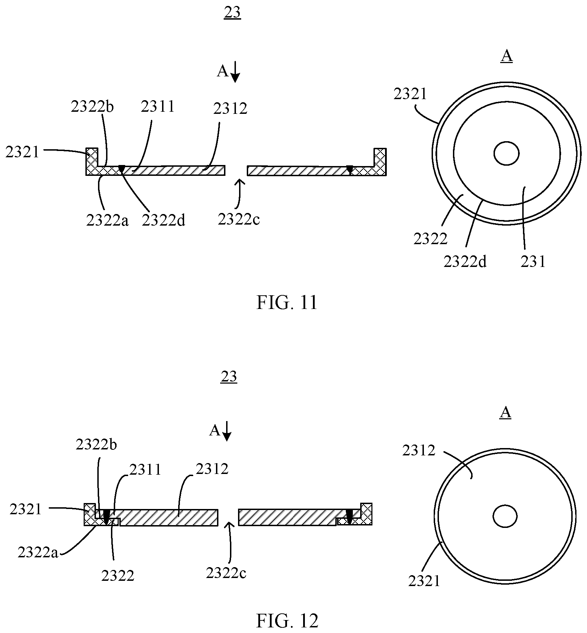

Referring to FIG. 11, in some embodiments, the lap portion 2322 is provided with a hollowed portion 2322c corresponding to the tab connecting portion 2312. The lap portion 2322 includes a first side 2322a close to the electrode assembly 21, a second side 2322b away from the electrode assembly 21, and an end surface 2322d located between the first side 2322a and the second side 2322b and defining the hollowed portion 2322c. The transitional connecting portion 2311 is welded to the end surface 2322d.

The transitional connecting portion 2311 may be connected to the end surface 2322d by butt-welding. As an example, the upper side of the transitional connecting portion 2311 may be coplanar with the second side 2322b of the lap portion 2322, or, the lower side of the transitional connecting portion 2311 may be coplanar with the first side 2322a of the lap portion 2322, or, both the upper side and the lower side of the transitional connecting portion 2311 are coplanar with the second side 2322b and the first side 2322a of the lap portion 2322 concurrently. The shape of the hollowed region 2322c matches the shape of the first connecting portion 231. In an example, the shape of the hollowed region 2322c is circular. The outer edge of the first connecting portion 231 is also circular.

In some embodiments, the weld formed by the welding between the transitional connecting portion 2311 and the lap portion 2322 may be a continuous, closed weld, or a plurality of weld segments spaced apart, or a plurality of weld points spaced apart, as long as the connection and flow capacity requirements are met.

The transitional connecting portion 2311 is welded to the end surface 2322d, so that the welding position between the first connecting portion 231 and the second connecting portion 232 is isolated from the vertical edge portion 2321, thereby avoiding mutual welding interference and alleviating welding deformation. The transitional connecting portion 2311 is welded to the end surface 2322d, so that the current collecting component 23 occupies less accommodation space inside the housing, thereby ensuring a desirable energy density of the battery.

Referring to FIG. 11, in some embodiments, the transitional connecting portion 2311 and the tab connecting portion 2312 assume a shape of coplanar flat plates.

With the transitional connecting portion 2311 and the tab connecting portion 2312 being coplanar flat plates, the amount of processing on the first connecting portion is reduced. For example, the first connecting portion may be molded in a single pass, thereby reducing the manufacturing cost. In addition, the flat-shaped first connecting portion can occupy less accommodation space inside the housing, thereby reducing the adverse effect on the energy density of the battery.

Understandably, the transitional connecting portion 2311 and the tab connecting portion 2312 may be two adjacent regions of the flat plate-shaped first connecting portion 231. For example, the transitional connecting portion 2311 is a region close to the periphery, and the tab connecting portion 2312 is a region close to the center.

Referring to FIG. 12, in some embodiments, the lap portion 2322 includes a first side 2322a close to the electrode assembly 21 and a second side 2322b away from the electrode assembly. The transitional connecting portion 2311 is welded to the second side 2322b.

As an example, the transitional connecting portion 2311 of the first connecting portion 231 and the lap portion of the second connecting portion 232 may be made into two parts that match each other in shape, so as to be welded together after being spliced. In an example, the laser beam penetrates the transitional connecting portion 2311 and partially melts the lap portion 2322 to form a penetration weld.

In these embodiments, the transitional connecting portion 2311 is welded to the second side 2322b, thereby forming a relatively large overlap region between the first connecting portion 231 and the second connecting portion 232 along a height direction of the housing. This arrangement can reduce the overall height of the current collecting component 23 along the first direction X, and in turn, reduce the accommodation space occupied by the current collecting component in the height direction, make the internal structure of the battery housing more compact, and reduce the loss of energy density of the battery.

Referring to FIG. 12, in some embodiments, the lap portion 2322 is provided with a hollowed portion 2322c corresponding to the tab connecting portion 2312. One side, close to the electrode assembly 21, of the tab connecting portion 2312 at least partially passes through the hollowed portion 2322c to get connected to the first tab 211.

As shown in FIG. 11, the lap portion 2322 may be in a ring shape that is hollowed at the center. One side, close to the electrode assembly 21, of the tab connecting portion 2312 protrudes toward the electrode assembly 21. The protruding part passes through the hollowed portion 2322c formed by the lap portion 2322, and is welded to the first tab 211.

In an example, a part of the tab connecting portion 2312 may protrude toward the side at which the electrode assembly 21 is located. In this case, the protruding part contacts and is welded to the first tab 211 to form a weld. To reduce the probability of cold solder joints between the tab connecting portion 2312 and the first tab 211, the protruding surface of the tab connecting portion 2312 may be set to protrude beyond a surface, close to the electrode assembly 21, of the lap portion 2322. In this way, the tab connecting portion 2312 can be in contact with the first tab 211, and even the tab connecting portion 2312 presses against the first tab 211, thereby improving the reliability of the welding bond.

The tab connecting portion 2312 at least partially passes through the hollowed region to get connected to the first tab 211, thereby reducing the welding clearance between the two components, reducing the probability of cold solder joints, and improving the reliability of the welding bond, and in turn, meeting the connection requirements and the electrical flow capacity requirements.

In some embodiments, as shown in FIG. 4 and FIG. 5, the electrode assembly 21 further includes a second tab 212 of a polarity different from that of the first tab 211. The first tab 211 and the second tab 212 are located at two ends of the electrode assembly 21 respectively.

The shell assembly 22 includes a housing 221 and an end cap 222. The housing 221 forms an accommodation space configured to accommodate the electrode assembly 21. The housing 221 includes an end wall 2212 located at one end of the accommodation space, and an opening located at another end of the accommodation space. The end cap 222 and the housing 221 are connected together to fit and cover the opening of the accommodation space. The first electrode lead-out portion 22A is the housing 221 or the end cap 222.

The shell assembly 22 further includes a second electrode lead-out portion 22B, and the second electrode lead-out portion 22B is inserted in the end wall 2212 and electrically connected to the second tab 212.

The second electrode lead-out portion 22B may be an electrode post. A mounting hole is provided on the end wall 2212. The second electrode lead-out portion 22B is dielectrically connected to the mounting hole on the end wall 2212 by an insulation piece. A part, located in the accommodation space, of the second electrode lead-out portion 22B is electrically connected to the second tab 212, so that the current of the second tab 212 can be conducted out of the shell assembly 22 through the second electrode lead-out portion 22B.

According to a second aspect, an embodiment of this application provides a battery 100. The battery includes the battery cell 20 disclosed in the above embodiment.

According to a third aspect, an embodiment of this application provides an electrical device. The electrical device includes the battery disclosed in the above embodiment. The battery is configured to provide electrical energy.

The structure of the battery cell 20 of this application is described below by using a cylindrical cell 20 as an example with reference to a specific embodiment.

The battery cell 20 includes an electrode assembly 21, a shell assembly 22, and a current collecting component 23. The electrode assembly 21 includes a first tab 211 and a second tab 212 of opposite polarities. The shell assembly 22 includes a housing 221 and an end cap 222. The housing 221 forms an accommodation space configured to accommodate the electrode assembly 21. The housing 221 includes an end wall 2212 located at one end of the accommodation space, and an opening located at another end of the accommodation space. The end cap 222 and the housing 221 are connected together to fit and cover the opening of the accommodation space.

The shell assembly 22 further includes a first electrode lead-out portion 22A and a second electrode lead-out portion 22B. The first electrode lead-out portion 22A may be the housing 221 or the end cap 222. The second electrode lead-out portion 22B is inserted in the end wall 2212 and electrically connected to the second tab 212.

The current collecting component 23 includes a first connecting portion 231 and a second connecting portion 232 connected to each other. The first connecting portion 231 is electrically connected to the first tab 211. The second connecting portion 232 is welded to the housing 221. The first tab 211 and the current collecting component 23 are located at an end in the housing 221, the end being close to the opening. The second tab 212 is located at an end in the housing 221, the end being away from the opening. The second tab is electrically connected to the second electrode lead-out portion 22B. The second electrode lead-out portion 22B is inserted in an end wall 2212 at an end of the housing 221, the end being away from the opening. The second electrode lead-out portion is dielectrically connected to the housing 221.

The material of the first tab 211 is copper, nickel, or copper-plated nickel. The material of the first connecting portion 231 is different from the material of the second connecting portion 232. Specifically, the melting point T1 of the first connecting portion 231, the melting point T2 of the second connecting portion 232, and the melting point T3 of the first electrode lead-out portion 22A satisfy: |T3 - T1| > |T3 - T2|. As an example, the material of the first connecting portion 231 is copper, the material of the second connecting portion 232 is at least one of chromium, nickel, or steel, and the material of the first electrode lead-out portion 22A is at least one of chromium, nickel, or steel.

The second connecting portion 232 includes a vertical edge portion 2321. The vertical edge portion 2321 may be connected to the housing 221 to form a first fusion-bonding portion 24 by external welding or internal welding. Along a second direction Y, the depth a of the first fusion-bonding portion 24, the thickness d3 of the vertical edge portion 2321, and the thickness d2 of the housing 221 satisfy: a < d2 + d3. Along the first direction X, the width of the first fusion-bonding portion 24 is b; and, along the second direction Y, the depth of the first fusion-bonding portion 24 is a. The values of a and b satisfy: b ≤ a.

The width c of a contact region between the vertical edge portion 2321 and the housing 221 as well as the width b of the first fusion-bonding portion 24 satisfy: c ≥ b + +0.5 mm. The thickness d2 of the housing 221 satisfies: 0.3mm ≤ d2 ≤ 0.65 mm. The thickness d3 of the vertical edge portion 2321 satisfies: 0.1 mm ≤ d3 ≤ 0.4 mm. In a case of external welding, the depth a of the first fusion-bonding portion 24 along the second direction Y satisfies 0.3mm ≤ a ≤ 1 mm, the width b of the first fusion-bonding portion 24 along the first direction X satisfies 0.1 mm ≤ b ≤ 0.9 mm, and the width c of the contact region between the vertical edge portion 2321 and the housing 221 along the first direction X satisfies 0.8 mm ≤ c ≤ 4 mm. In a case of internal welding, the depth a of the first fusion-bonding portion 24 along the second direction Y, the width b of the first fusion-bonding portion 24 along the first direction X, and the width c of the contact region between the second connecting portion 232 and the housing 221 along the first direction X satisfy: 0.3 mm ≤ a ≤ 1 mm, 0.3 mm ≤ b ≤ 1 mm, and 0.8 mm ≤ c ≤ 4 mm.

The second connecting portion 232 further includes a lap portion 2322 noncoplanar with the vertical edge portion 2321. The first connecting portion 231 includes a transitional connecting portion 2311 and a tab connecting portion 2312. The lap portion 2322 includes a first side 2322a close to the electrode assembly 21, a second side 2322b away from the electrode assembly 21, and an end surface 2322d located between the first side 2322a and the second side 2322b and defining the hollowed region 2322c. The transitional connecting portion 2311 may be welded to any one of the first side 2322a, the second side 2322b, or the end surface 2322d of the lap portion 2322. The tab connecting portion 2312 is welded to the first tab 211 to implement electrical conduction between the first tab 211 and the housing 221.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A battery cell, comprising:
an electrode assembly, comprising a first tab;
a shell assembly, configured to accommodate the electrode assembly, wherein the shell assembly comprises a first electrode lead-out portion; and
a current collecting component, comprising a first connecting portion and a second connecting portion connected to each other, wherein the first connecting portion is welded to the first tab, and the second connecting portion is welded to the first electrode lead-out portion,
wherein a material of the first connecting portion is different from a material of the second connecting portion, and a melting point, T2, of the second connecting portion is closer to a melting point, T3, of the first electrode lead-out portion than a melting point, T1, of the first connecting portion.

2. The battery cell according to claim 1, wherein the melting point, T2, of the second connecting portion and the melting point, T3, of the first electrode lead-out portion satisfy: 0.75 × T3 ≤ T2 ≤ 1.3 × T3.

3. The battery cell according to claim 1 or 2, wherein the material of the second connecting portion is at least one of chromium, nickel, or steel, and a material of the first electrode lead-out portion is at least one of chromium, nickel, or steel.

4. The battery cell according to any one of claims 1 to 3, wherein the material of the second connecting portion is identical to a material of the first electrode lead-out portion.

5. The battery cell according to any one of claims 1 to 4, wherein the first connecting portion comprises a first metal layer and a first fluxing layer, and the first fluxing layer is disposed on a surface of the first metal layer.

6. The battery cell according to claim 5, wherein the first fluxing layer is disposed on a surface of the first metal layer facing the first tab; and/or, the first connecting portion is welded to the second connecting portion, and at least a part of the first fluxing layer is disposed on a surface of the first metal layer facing the second connecting portion.

7. The battery cell according to any one of claims 1 to 6, wherein the second connecting portion comprises a second metal layer and a second fluxing layer, and the second fluxing layer is disposed on a surface of the second metal layer.

8. The battery cell according to claim 7, wherein the second fluxing layer is disposed on a surface of the second metal layer facing the shell assembly; and/or, the first connecting portion is welded to the second connecting portion, and at least a part of the second fluxing layer is disposed on a surface of the second metal layer facing the first connecting portion.

9. The battery cell according to any one of claims 1 to 8, wherein the shell assembly comprises:
a housing in which an accommodation space and an opening are formed, wherein the accommodation space is configured to accommodate the electrode assembly, and the opening is located at one end of the accommodation space; and
an end cap, connected to the housing to fit and cover the opening,
wherein the first electrode lead-out portion is the housing or the end cap.

10. The battery cell according to claim 9, wherein the second connecting portion is located between the first connecting portion and the end cap, the end cap comprises an abutment portion, the abutment portion contacts the second connecting portion, and the second connecting portion is welded to the first connecting portion and the abutment portion separately.

11. The battery cell according to claim 10, wherein the second connecting portion is welded to the abutment portion to form a first fusion-bonding portion, and along a first direction parallel to an axial direction of the electrode assembly, a depth, a, of the first fusion-bonding portion is less than a sum of a thickness, d1, of the second connecting portion and a thickness, d0, of the abutment portion.

12. The battery cell according to claim 11, wherein the end cap comprises an end cap body and a protruding portion that protrudes beyond the end cap body toward the electrode assembly, wherein the end cap body is connected to the protruding portion, a concave portion is formed on a side of the protruding portion away from the electrode assembly, and the abutment portion is located on a bottom wall of the protruding portion.

13. The battery cell according to claim 9, wherein the second connecting portion comprises a vertical edge portion connected to the first connecting portion and extending along a first direction, and an outer side of the vertical edge portion is welded to the housing to form a first fusion-bonding portion; and
the first direction is parallel to an axial direction of the electrode assembly.

14. The battery cell according to claim 13, wherein the first fusion-bonding portion is configured to be formed by a laser beam penetrating the housing from outside the housing and melting a part of the vertical edge portion.

15. The battery cell according to claim 14, wherein a thickness, d3, of the vertical edge portion and a thickness, d2, of the housing satisfy: d3/d2 ≥ 0.25.

16. The battery cell according to claim 15, wherein the thickness, d2, of the housing satisfies: 0.3 mm ≤ d2 ≤ 0.65 mm, and the thickness, d3, of the vertical edge portion satisfies: 0.1 mm ≤ d3 ≤ 0.6 mm.

17. The battery cell according to any one of claims 14 to 16, wherein along a second direction perpendicular to the axial direction of the electrode assembly, a depth, a, of the first fusion-bonding portion, a thickness, d3, of the vertical edge portion, and a thickness, d2, of the housing satisfy: a < d2 + d3.

18. The battery cell according to any one of claims 14 to 17, wherein along a second direction perpendicular to the axial direction of the electrode assembly, a width, b, of the first fusion-bonding portion along the first direction and a depth, a, of the first fusion-bonding portion along the second direction satisfy: b ≤ a.

19. The battery cell according to any one of claims 14 to 18, wherein along the first direction, a width, c, of a contact region between the vertical edge portion and the housing and a width, b, of the first fusion-bonding portion satisfy: c ≥ b + 0.5 mm.

20. The battery cell according to any one of claims 14 to 19, wherein a depth, a, of the first fusion-bonding portion along a second direction, a width, b, of the first fusion-bonding portion along the first direction, and a width, c, of a contact region between the second connecting portion and the housing along the first direction satisfy: 0.3 mm ≤ a ≤ 1 mm, 0.1 mm ≤ b ≤ 0.9 mm, and 0.8 mm ≤ c ≤ 4 mm; and
the second direction is perpendicular to the axial direction of the electrode assembly.

21. The battery cell according to claim 13, wherein the first fusion-bonding portion is configured to be formed by a laser beam penetrating the vertical edge portion from inside the housing and melting a part of the housing.

22. The battery cell according to claim 21, wherein along a second direction, a thickness, d3, of the vertical edge portion and a thickness, d2, of the housing satisfy: 0.25 ≤ d3/d2 ≤ 1; and
the second direction is perpendicular to the axial direction of the electrode assembly.

23. The battery cell according to claim 21 or 22, wherein along the first direction, a width, c, of a contact region between the vertical edge portion and the housing and a width, b, of the first fusion-bonding portion satisfy: c ≥ b + 0.5 mm.

24. The battery cell according to any one of claims 21 to 23, wherein a width, b, of the first fusion-bonding portion along the first direction and a depth, a, of the first fusion-bonding portion along a second direction satisfy: b ≤ a; and
the second direction is perpendicular to the axial direction of the electrode assembly.

25. The battery cell according to claim 24, wherein along the second direction, the depth, a, of the first fusion-bonding portion, a thickness, d3, of the vertical edge portion, and a thickness, d2, of the housing satisfy: a < d2 + d3.

26. The battery cell according to any one of claims 21 to 25, wherein a thickness, d2, of the housing satisfies: 0.3 mm ≤ d2 ≤ 0.65 mm, and a thickness, d3, of the vertical edge portion satisfies: 0.1 mm ≤ d3 ≤ 0.4 mm.

27. The battery cell according to any one of claims 21 to 26, wherein a depth, a, of the first fusion-bonding portion along a second direction, a width, b, of the first fusion-bonding portion along the first direction, and a width, c, of a contact region between the second connecting portion and the housing along the first direction satisfy: 0.3 mm ≤ a ≤ 1 mm, 0.3 mm ≤ b ≤ 1 mm, and 0.8 mm ≤ c ≤ 4 mm.

28. The battery cell according to any one of claims 13 to 27, wherein the first connecting portion comprises a transitional connecting portion and a tab connecting portion connected to each other, the tab connecting portion is welded to the first tab, and the transitional connecting portion is welded to the second connecting portion.

29. The battery cell according to claim 28, wherein the transitional connecting portion is disposed along an outer edge of the tab connecting portion and connected to an inner side of the vertical edge portion.

30. The battery cell according to claim 28, wherein the second connecting portion further comprises a lap portion connected to the vertical edge portion, and the lap portion is welded to the transitional connecting portion.

31. The battery cell according to claim 30, wherein the lap portion comprises a first side close to the electrode assembly and a second side away from the electrode assembly, and the transitional connecting portion is welded to the first side.

32. The battery cell according to claim 31, wherein the lap portion is provided with a hollowed portion corresponding to the tab connecting portion, and the hollowed portion is configured to allow passage of a laser beam to implement welding between the tab connecting portion and the first tab.

33. The battery cell according to claim 32, wherein the hollowed portion comprises a plurality of hollowed grooves spaced apart, and the hollowed grooves correspond to a position of a weld between the tab connecting portion and the first tab.

34. The battery cell according to claim 30, wherein the lap portion is provided with a hollowed portion corresponding to the tab connecting portion, the lap portion comprises a first side close to the electrode assembly, a second side away from the electrode assembly, and an end surface located between the first side and the second side and defining the hollowed portion, and the transitional connecting portion is welded to the end surface.

35. The battery cell according to any one of claims 28 to 34, wherein the transitional connecting portion and the tab connecting portion assume a shape of coplanar flat plates.

36. The battery cell according to claim 30, wherein the lap portion comprises a first side close to the electrode assembly and a second side away from the electrode assembly, and the transitional connecting portion is welded to the second side.

37. The battery cell according to claim 36, wherein the lap portion is provided with a hollowed portion corresponding to the tab connecting portion, and a side of the tab connecting portion close to the electrode assembly at least partially passes through the hollowed portion to connect to the first tab.

38. The battery cell according to any one of claims 1 to 37, wherein the electrode assembly comprises a second tab of a polarity different from that of the first tab, and the first tab and the second tab are located at two ends of the electrode assembly respectively;
the shell assembly comprises a housing and an end cap, the housing forms an accommodation space configured to accommodate the electrode assembly, the housing comprises an end wall located at one end of the accommodation space and an opening located at another end of the accommodation space; the end cap is connected to the housing to fit and cover the opening; and the first electrode lead-out portion is the end cap or the housing; and
the shell assembly further comprises a second electrode lead-out portion, and the second electrode lead-out portion is inserted in the end wall and electrically connected to the second tab.

39. A battery, comprising the battery cell according to any one of claims 1 to 38.

40. An electrical device, wherein the electrical device comprises the battery according to claim 39, and the battery is configured to provide electrical energy.
